# EUROPÄISCHE PATENTSCHRIFT

(11) **EP 1 970 583 B1**
(45) Veröffentlichungstag und Bekanntmachung des Hinweises auf die Patenterteilung: **02.01.2013**
(21) Anmeldenummer: 08004633.7
(22) Anmeldetag: 13.03.2008
(51) Int. Cl.: F16C 29/06, F16C 33/66, F16C 29/08

(54) **Linearwälzlager**
Linear roller bearing
Palier à roulement linéaire

(30) Priorität: 16.03.2007 DE 102007012647
(43) Veröffentlichungstag der Anmeldung: 17.09.2008
(73) Patentinhaber: AB SKF, 415 50 Göteborg (SE)
(72) Erfinder: Mayer, Uwe, 97702 Münnerstadt (DE); Stahl, Erwin, 97714 Rottershausen (DE); Velde, Henryk, 97440 Werneck (DE); Warsch, Thorsten, 97247 Untereisenheim (DE); Wiesenau, Doreen, 97525 Schwebheim (DE)
(74) Vertreter: Kohl, Thomas

(56) Entgegenhaltungen:
- EP-A1- 0 390 156
- EP-A1- 0 392 261
- EP-A1- 0 456 082
- EP-A2- 0 608 832
- DE-A1- 3 639 544
- DE-A1- 19 741 626
- DE-B- 1 287 382
- JP-A- 10 299 768
- SKF ED - SKF: "Linear Bearings and Units - Technical Handbook", INTERNET CITATION, 1. Dezember 2006 (2006-12-01), Seiten 1-60, XP002670758, Gefunden im Internet: URL:http://www.skf.com/files/597937.pdf [gefunden am 2012-03-05]

## Beschreibung

Die Erfindung betrifft ein Linearwälzlager.

Beispielsweise aus der DE 40 15 124 A 1 ist ein Kugellager für Längsbewegungen bekannt, dass einen mit seiner Innenfläche eine Welle umgebenden Käfig besitzt. Der Käfig hat dabei axiale Führungsbahnen für belastete Kugeln und axiale Rückführbalnen für unbelastete Kugeln sowie jeweils einen Deckel an jedem seiner beiden Enden. Jeder Deckel hat Umlenkbahnen, die jeweils eine Führungsbahn mit einer Rückführbahn endseitig verbindet. An den beiden axialen Enden sind weiterhin Dichtungen in den Käfig eingesetzt.

Das Kugellager für Längsbewegungen der EP 0 456 082 A 1 besitzt einen mit seiner Innenfläche eine Welle umgebenden Käfig. Der Käfig hat axiale Führungsbahnen für belastete Kugeln und axiale Rückführbahnen für unbelastete Kugeln sowie jeweils einen Deckel an jedem seiner beiden Enden. Jeder Deckel hat Umlenkbahnen, die jeweils eine Führungsbahn mit einer Rückführbahn endseitig verbinden. Dabei sind für ein Einschnappen der Deckel in die Endabschnitte des Käfigs die Endabschnitte innenmantelseitig mit Vertiefungen ausgebildet. Ferner sind für ein Einsetzen von Dichtringen in die Endabschnitte am Innenmantel der Endabschnitte radial umlaufende Rillen vorgesehen.

Eine Aufgabe der Erfindung ist es, ein verbessertes Linearwälzlager zu schaffen.

Die Aufgabe wird durch die Gegenstände der unabhängigen Ansprüche gelöst. Vorteilhafte Ausgestaltungen sind in den Unteransprüchen beschrieben.

Damit ist mit besonderem Vorteil ein hochmodulares, einfach zusammensetzbares und rationell herstellbares System von Linearwälzlagerkomponenten geschaffen.

Weitere Vorteile, Merkmale und Einzelheiten der Erfindung ergeben sich aus den im folgenden beschriebenen Ausführungsbeispielen der Erfindung anhand der Figuren. Dabei zeigen:
- Figur 1: in perspektivischer Ansicht ein teilzusammengebautes, in Umfangsrichtung in sich geschlossenes, hohlzylinderartiges Linearkugellager,
- Figur 2: in perspektivischer Ansicht ein Umlenkelement des Linearkugellagers der Figur 1,
- Figur 3: in perspektivischer Ansicht einen Schmierstoffspeicher des Linearkugellagers der Figur 1,
- Figur 4: in perspektivischer Ansicht ein Deckelement für das Linearkugellager der Figur 1,
- Figur 5: einen ausschnittsweisen Längsschnitt durch eine zwischen einem Umlenk- und einem Deckelement angeordnete Dichtung,
- Figur 6: in perspektivischer Ansicht das zusammengebaute Linearkugellager der Figur 1,
- Figuren 7 und 8: in der Figur 6 mit A und B bezeichnete Ausschnittsvergrößerungen der Figur 6,
- Figur 9: in perspektivischer Ansicht ein in Umfangsrichtung unterbrochenes Linearkugellager,
- Figur 10: eine Frontansicht einer Dichtung für das Linearkugellager der Figur 9,
- Figur 11: einen Längsschnitt durch die Dichtung der Figur 10 und
- Figur 12: eine in der Figur 11 mit D bezeichnete Ausschnittsvergrößerung der Figur 11.

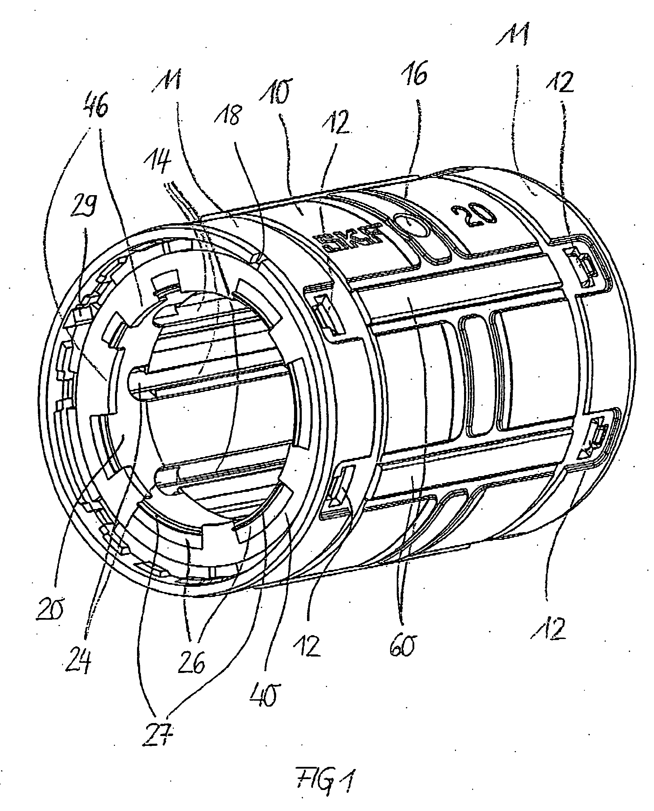

Die Figur 1 zeigt als ein Ausführungsbeispiel der Erfindung in perspektivischer Ansicht Elemente 10, 20 und 30 eines Linearkugellagers mit mehreren, zum endlosen Umlaufen vorgesehenen Kugelreihen. Durch die Höhlung des in der Figur 1 dargestellten Linearkugellagers ist eine Achse oder Welle zum Hindurchführen vorgesehen, so dass über die lasttragenden Kugeln und Laufbahneinlagen 60 das Linearkugellager gegenüber der Achse oder Welle wenigstens längsverschieblich ist. Lediglich aus Gründen der Übersichtlichkeit sind die Kugeln wie auch die Achse oder Welle nicht dargestellt.

Dabei umfasst das Linearkugellager ein hohlzylinderartiges Grundelement 10 mit im wesentlichen geradlinigen Führungen 14 für die belasteten und unbelasteten Kugeln sowie Aufnahmeöffnungen für Laufbahneinlagen 60, so dass die belasteten Kugeln einerseits auf der Achse oder Welle und andererseits auf den Laufbahneinlagen 60 abrollen. Dabei können wie in Figur 1 dargestellt, die Laufbahneinlagen 60 nach außen hin entsprechend einem Längsstreifen eines Zylindermantels ausgebildet sein, wobei in anderen Ausführungsformen auch Laufbahnelemente zum Einsatz kommen können, deren äußerer, mittlerer Bereich eine radial nach außen gerichtete Ausbauchung aufweist, wodurch mit dem Linearkugellager dann Fluchtungsfehler bis zu einem gewissen Grad ausgeglichen werden können. Dabei können aber mit Vorteil ein und dieselben Elemente 10, 20 und 30 sowohl für die winkeleinstellbare als auch für eine vergleichbare, nicht winkeleinstellbare Ausführung verwendet werden.

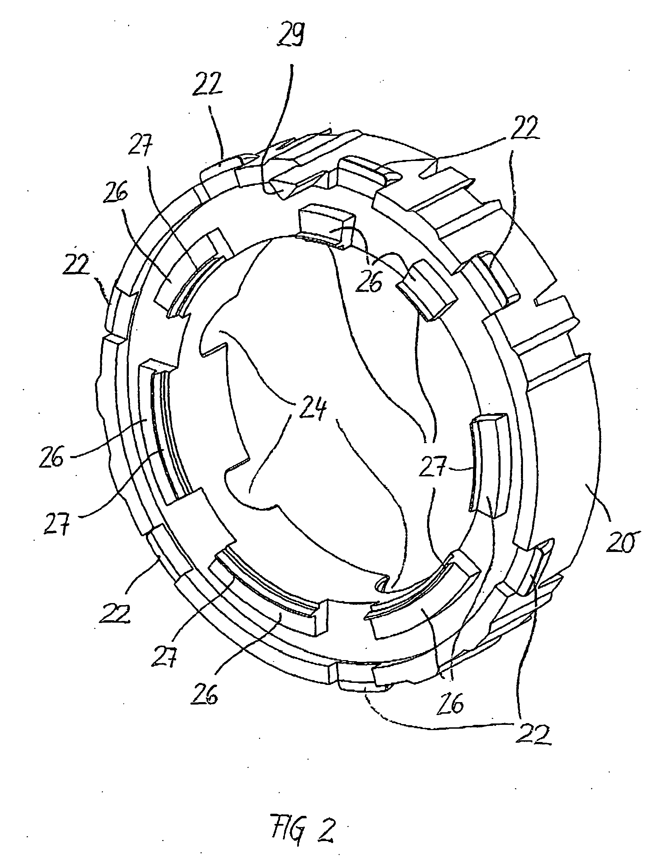

An beiden axialen Enden ist das Grundelcmcnt 10 gleichartig ausgebildet. Im folgenden wird die Beschaffenheit im Bereich der axialen Enden ausschließlich bezugnehmend auf das linke axiale Ende erläutert, wobei dies entsprechend natürlich auch für das andere axiale Ende gilt. Dabei ist besagtes axiales Ende des Grundelements 10 im Bereich des Außenmantels des Grundelements 10 mit einer derartigen axialen Auskragung 11 ausgebildet, dass in die Höhlung der Auskragung 11 ein Umlenkelement 20 und ein Deckelement 30 einschnappbar sind. In der Figur 1 ist das Umlenkelement 20 im eingeschnappten Zustand dargestellt. Die Figur 2 zeigt ebenfalls in perspektivischer Ansicht das Umlenkelement 20 in Alleinstellung.

Das Umlenkelement 20 umfasst dabei halbkreisartig ausgebildete Führungen 24 mittels derer die Kugeln zwischen den geradlinigen Führungen 14 im Grundelement 10 für die belasteten und unbelasteten Kugeln umgelenkt werden. Die Auskragung 11 ist für besagtes Einschnappen mit die Auskragung 11 radial durchdringenden Öffnungen 12 ausgebildet, in die entsprechende radiale Fortsätze 22 des Umlenkelements 20 zum Einschnappen vorgesehen sind. Dabei sind die Öffnungen 12 und die Fortsätze 22 derart aufeinander abgestimmt angeordnet und ausgebildet, dass das Grundelement 10 und das Umlenkelement 20 nur in einer vorgebbaren Verdrehposition miteinander verbindbar sind, so dass sich die Führungen 24 im Umlenkelement 20 passgenau an die des Grundelements 10 anschließen. Bei der Montage wird dabei das Umlenkelement 10 axial von links in die Auskragung 11 hineingedrückt und schnappt dann entsprechend ein.

Weiterhin ist das Umlenkelement 20 an der nach außen gerichteten Stirnseite in einem inneren Randbereich mit sektorartigen axialen Fortsätzen 26 ausgebildet, so dass zwischen den sektorartigen Fortsätzen 26 und diese gleichzeitig umschließend, ein ringartiger Schmierstoffspeicher 40 einsetzbar ist. Passgenau zwischen den sektorartigen Fortsätzen 26 des Umlenkelements 20 weist der Schmierstoffspeichcr 40 zwischen den sektorartigen Fortsätzen 26 radial nach innen, hin zur Achse oder Welle auskragende Fortsätze 46 auf, die einem Schmieren der Achse oder Welle ausschließlich in denjenigen Bereichen dienen, auf denen die Kugeln zum Abrollen vorgesehen sind. Damit ist klar, dass auch die sektorartigen Fortsätze 26 am Umlenkelement 20 derart platziert sind, dass die radial nach innen hin auskragenden Fortsätze 46 des Schmierstoffspeichers 40 vorgenannter Bedingung genügen. Weiterhin sind die sektorartigen Fortsätze 26 am Umlenkelement 20 und die radialen Fortsätze 46 am Schmierstoffspeicher 40 derart aufeinander abgestimmt angeordnet und ausgebildet, dass eine bezüglich der gegenseitigen Verdrehposition richtige Montage sozusagen erzwungen wird.

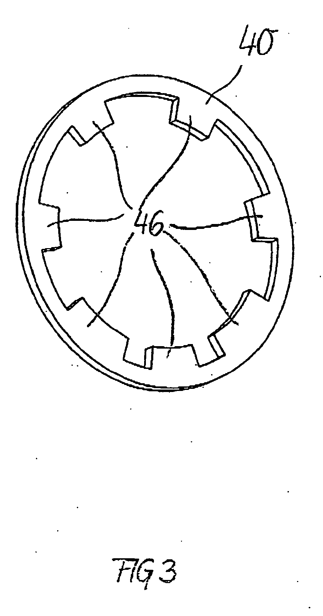

In der Figur 1 ist der Schmierstoffspeicher 40 in in das Umlenkelement 20 eingelegtem Zustand dargestellt, wohingegen er in Figur 3 nochmals in Alleinstellung perspektivisch dargestellt ist. Dabei kann der Schmierstoffspeicher 40 aus einem porösen Material, beispielsweise Schaumstoff, ausgebildet sein und als Schmierstoff ein Öl dienen, mit dem der Schaumstoff getränkt ist. Dadurch, dass ausschließlich Bereiche geschmiert werden, auf denen die Kugeln auf der Achse oder Welle abrollen, wird mit Vorteil die Gebrauchsdauer des einmal mit Schmierstoff gefüllten Schmierstoffspeichcrs 40 deutlich erhöht, bis hin zu einer Lebensdauerschmierung. In anderen Ausführungen kann aber auch eine Ausführung, bei der Öl in einer polymeren Matrix gehalten ist, was auch unter dem Stichwort "Solid Oil" bekannt ist, verwendet und/oder nachgeschmiert werden.

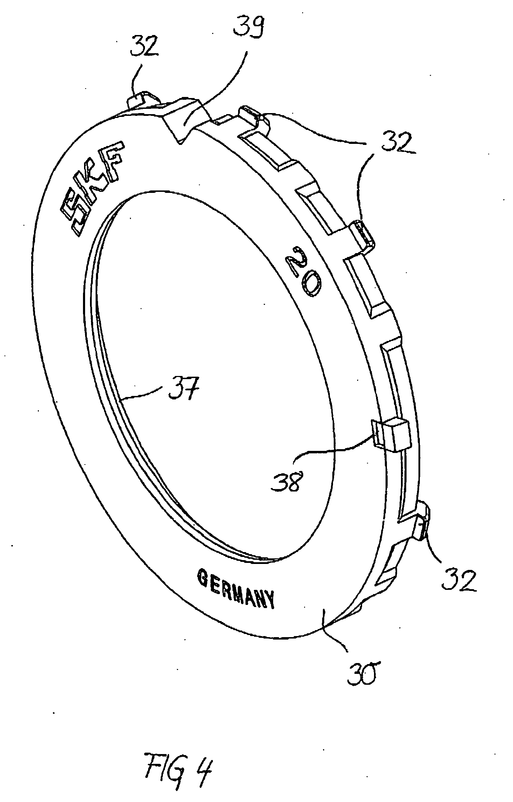

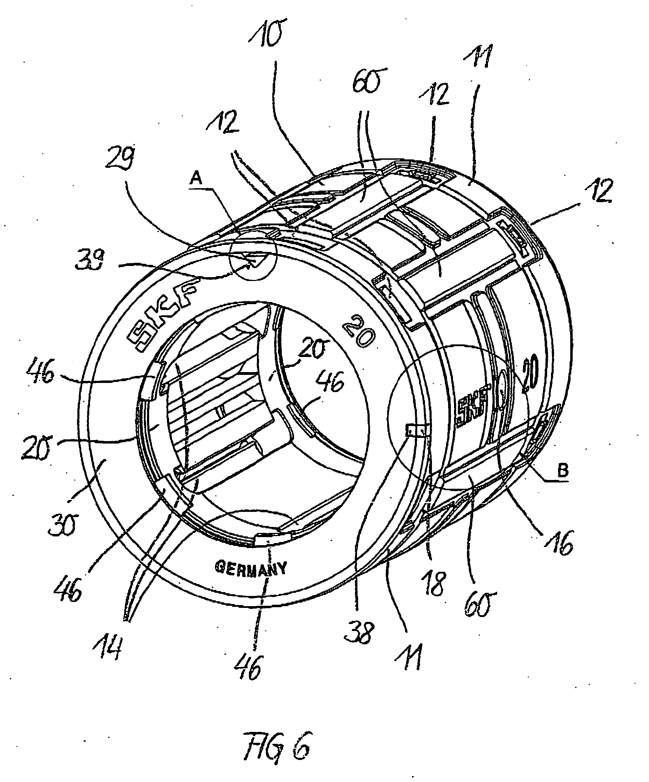

Abgeschlossen wird das in der Figur 1 dargestellte Linearkugellager schließlich dadurch, dass von der linken Seite her noch das in der Figur 4 dargestellte Deck-element 30 in die Auskragung 11 des Grundelements 10 eingeschnappt wird, so dass sich das Linearkugellager entsprechend Figur 6 ergibt. Dabei wird das Deckelement 30 in die gleichen Öffnungen 12 der Auskragung 11 eingeschnappt, wozu auch das Deckelement 30 entsprechend ausgebildete radiale Fortsätze 32 aufweist. Dabei sind natürlich auch die radialen Fortsätze 32 am Deckelement 30 und die Öffnungen 12 der Auskragung 11 derart aufeinander abgestimmt angeordnet und ausgebildet, dass eine bezüglich der gegenseitigen Verdrehposition richtige Montage sozusagen erzwungen wird.

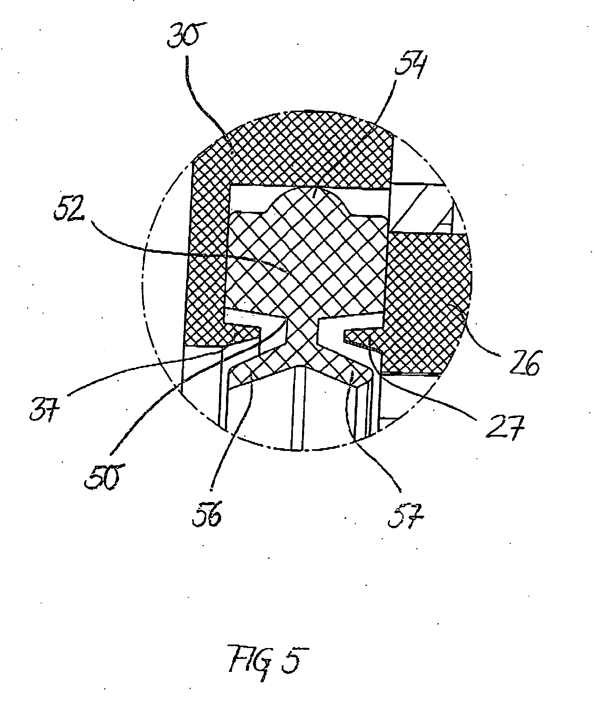

In der Figur 6 zwar nicht dargestellt, kann aber zwischen das Umlenkelement 20 und das Deckelement 30 gemäß Figur 5 auch eine Dichtung 50 mit angeordnet werden, die einem Abdichten des Linearkugellagers gegenüber der Achse oder Welle dient. Dabei zeigt die Figur 5 ausschnittsweise einen Längsschnitt der zwischen dem Umlenkelement 20 und dem Deckelement 30 angeordneten Dichtung 50. Die Dichtung 50 ist dabei als ein in sich geschlossener Ring ausgebildet. Die Dichtung 50 ist materialeinheitlich und einstückig aus einem Elastomermaterial hergestellt. Der Längsschnitt der Dichtung 50 weist dabei einen rcchteckartigen Grundbereich 52 auf, an dem sich radial nach außen hin ein ringartig umlaufender Wulst 54 anschließt und an dessen Innenmantel sich eine schräg nach außen und eine schräg nach innen auskragende Dichtlippe 56 und 57 anschließen.

Weiterhin sind die sektorartigen axialen Fortsätze 26 des Umlenkelements 20 mit axial auskragenden Nasen 27 versehen, die zum Eingreifen zwischen besagtem rechteckförmigen Grundbereich 52 und der schräg nach innen hin weisenden Dichtlippe 57 vorgesehen sind. Ebenso ist das Deckelement 30 innenmantelseitig mit einer ringartig umlaufenden, axial nach innen hin auskragenden Nase 37 ausgebildet, die zum Eingreifen zwischen dem rechteckartigen Grundbereich 52 der Dichtung 50 und der schräg nach außen hin auskragenden Dichtlippe 56 der Dichtung 50 zum Eingriff vorgesehen ist. Damit wird mit besonderem Vorteil besagte Dichtung 50 sicher geführt, gehalten und zentriert. Durch die beiden Dichtlippen 56 und 57 und die Außengeometrie des Grundelements 10 wird dabei auch bei Fluchtungsfehlern zwischen dem Linearkugellager und der Achse oder Welle, also auch bei Winkelfehlern, eine gute Dichtwirkung erzielt, so dass Verschmutzungen vom Inneren des Linearkugellagers ferngehalten werden und ein vorhandener Schmierstoff im Inneren des Linearkugellagers gehalten wird.

Wie den Figuren 1 und 6 entnommen werden kann, ist das Grundelement 10 des Linearkugellagers weiterhin in einem Mittenbereich mit einer Vertiefung 16 ausgebildet, die einem axial- und verdrehgesicherten Befestigen gegenüber einer Einbauumgebung dient und gleichzeitig als Schmiernippel für ein Nachschmieren des Linearkugellagers genutzt werden kann. Gleichzeitig ist diese Umfangsstelle für das verdrehsichere Befestigen stirnseitig sowohl an der Stirnseite der Auskragung 11 des Grundelements 10 als auch am Deckelement 30 durch entsprechende Markierungen 18 und 38 gekennzeichnet, was die winkelpositionsrichtige Montage des Linearkugellagers erheblich vereinfacht. Dabei schließt sich an die als Vertiefung ausgebildete Markierung 38 am Deckelement 30 ein radialer Fortsatz an, der zum Eingreifen in die als Aussparung ausgebildete Markierung 18 an der Auskragung 11 entsprechend passgenau ausgebildet ist.

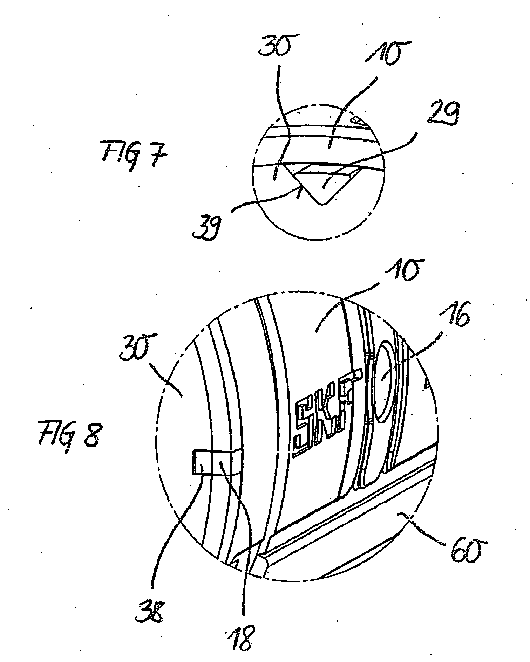

Weiterhin ist das Linearkugellager für eine vorgebbare, an einer bestimmten Umfangsstelle im wesentlichen senkrecht zum Zylindermantel stehende Hauptlastrichtung ausgebildet, die ebenfalls an der Stirnseite des Linearkugellagers durch eine Markierung gekennzeichnet ist. Dabei wird die Markierung durch einen axial vorstehenden Fortsatz 29 am Umlenkelement 20 realisiert, der in eine entsprechende Ausnehmung 39 des Deckelements 30 eingreift. Dabei sind insbesondere das Deckelement 30 und das Umlenkelement 20 unterschiedlich farbig ausgebildet, so dass die Markierung besonders gut erkennbar ist. Auch diese Markierung erleichtert dabei den bezüglich der Hauptlastrichtung richtigen Einbau des Linearkugellagers. Die Figuren 7 und 8 zeigen dabei noch einmal in der Figur 6 mit A und B bezeichnete Ausschnittsvcrgrößerungen der Stirnseite im Bereich der Markierungen 18 und 38.

Die Elemente 10, 20 und 30 sind insbesondere spritzgusstechnisch aus einem Kunststoff hergestellt. Dabei sind insbesondere das Umlenkelement 20 und das Deckelcment 30 in axialer Richtung frei von Hinterschneidungen ausgebildet, was deren spritzgusstechnische Herstellung besonders einfach und damit kostengünstig ermöglicht. Aufwendige Schieber am Spritzgusswerkzeug sind damit mit Vorteil nicht erforderlich. Auch das Grundelement ist diesbezüglich mit besonderem Vorteil derart gestaltet, dass es innen ausschließlich axial entformbar ist und nur nach außen radial entformt werden muss. Damit kann ebenfalls ein einfach aufgebautes Spritzgusswerkzeug zum Einsatz kommen, was sich wiederum positiv auf die Kostenposition auswirkt. Besonders hervorzuheben ist dabei, dass die Herstellung mit besonderem Vorteil ohne eine Zwangsentformung auskommt.

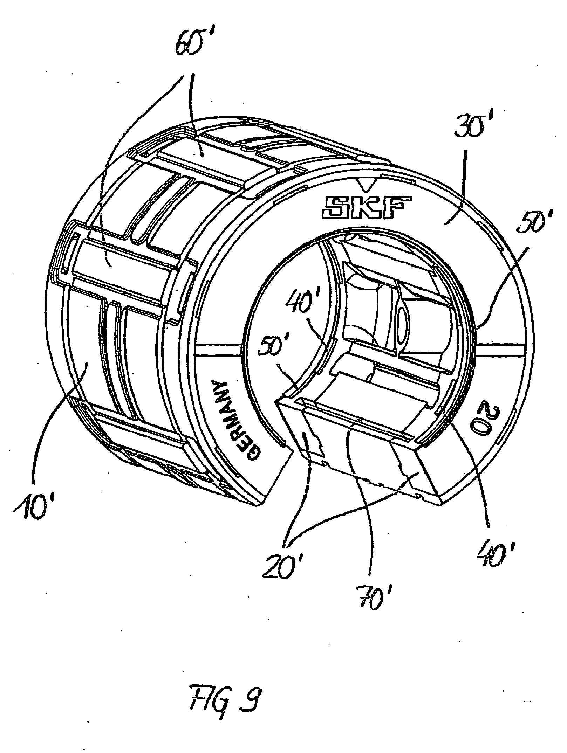

Die Figur 9 zeigt als ein weiteres Ausführungsbeispiel der Erfindung in perspektivischer Ansicht ein Linearkugellager, das anders als das Linearkugellager der Figuren 1 bis 8 in Umfangsrichtung nicht in sich hohlzylinderartig geschlossen ausgebildet ist, sondern der Hohlzylinder in einem sektorartigen Umfangsabschnitt mit einer Durchbrechung ausgebildet ist, die die volle Wandstärke und die gesamte Längsausdehnung des Linearkugellagers erfasst. Das Linearkugellager der Figur 9 ist dabei ähnlich dem Linearkugellager der Figuren 1 bis 8 aus den dort bezeichneten Elementen 10', 20' und 30' zusammengesetzt. Dabei umfassen das Grundelement 10' und die an beiden axialen Enden angeordneten Umlenkelemente 20' innenmantelseitig, beiderseits besagter Durchbrechung rillenartige Vertiefungen 70', in denen zum Abdichten gegenüber der Achse eine entsprechende Dichtung eingesetzt werden kann.

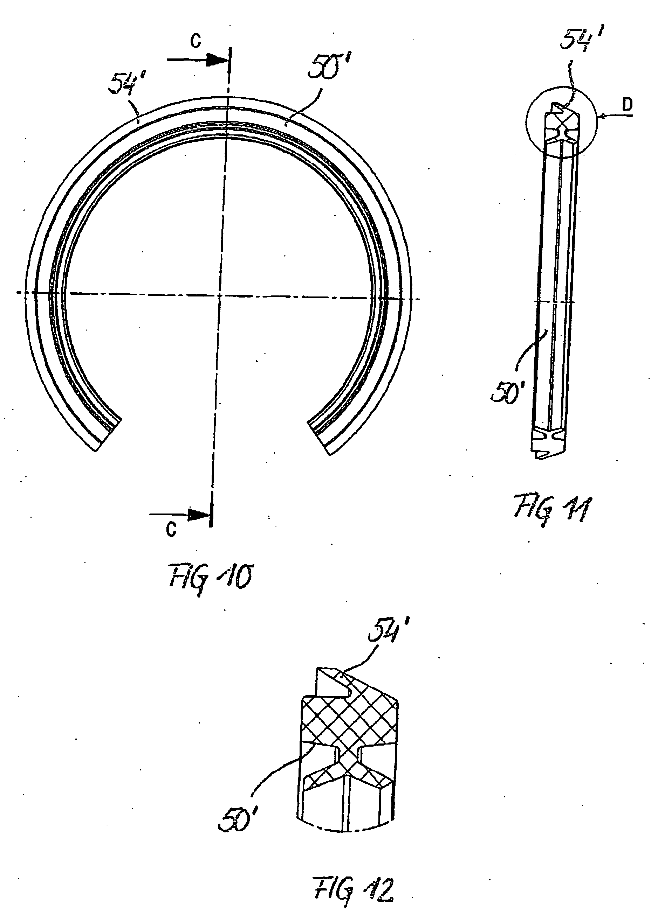

Weiterhin kann auch bei dem Linearkugellager der Figur 9 zwischen dem Umlenkelement 20' und dem Deckelement 30' eine Dichtung 50' eingesetzt sein, die sich von der Dichtung 50 gemäß der Figur 5 dadurch unterscheidet, dass die Dichtung 50' keinen in sich geschlossenen Ring ausbildet und dass auch außenmantelseitig anstelle des ringartig umlaufenden Wulstes 54 ein schräg nach außen auskragender Fortsatz 54' ausgebildet ist, was entsprechend in den Figuren 10 bis 12 dargestellt ist. Die Figur 10 zeigt dabei eine Frontansicht, die Figur 11 einen Längsschnitt entlang der Linie C-C der Figur 10 und die Figur 12 das in der Figur 10 mit D bezeichnete Detail der Dichtung 50'. Dabei bewirkt besagter schräg nach außen orientierter Fortsatz 54', dass die Dichtung 50' radial in Richtung zur Achse hin entsprechend angedrückt wird, so dass mit besonderem Vorteil dadurch eine besonders gute Dichtwirkung sichergestellt wird. Ansonsten gilt das vorausgehend zu den Figuren 1 bis 8 Beschriebene für die Figuren 9 bis 11 entsprechend, wobei bei den Figuren 9 bis 12 den Figuren 1 bis 8 entsprechende Bauelemente mit gleichen Bezugszeichennummern, ergänzt um einen Hochstrich, bezeichnet sind.

In anderen Ausführungen kann natürlich auch das Dichtungsdesign entsprechend den Figuren 10 bis 12 bei einem in Umfangsrichtung in sich geschlossenen ausgebildeten, hohlzylinderartigen Linearwälzlager angewandt sein und umgekehrt natürlich auch eine entsprechend der Figur 5 ausgebildete Dichtung bei einem in Umfangsrichtung in sich nicht geschlossen ausgebildeten Linearwälzlager zum Einsatz kommen.

### Bezugszeichenliste

- 10, 10': Grundelement
- 11: Auskragung
- 12: Öffnung
- 14: Führung
- 16: Vertiefung
- 18: Markierung

- 20, 20': Umlenkelement
- 22: radialer Fortsatz
- 24: Führung
- 26: axialer Fortsatz
- 27: Nase
- 29: Fortsatz

- 30, 30': Deckelement
- 32: radialer Fortsatz
- 37: Nase
- 38: Markierung
- 39: Ausnehmung

- 40,40': Schmierstoffspeicher
- 46: Fortsatz

- 50,50': Dichtung
- 52: rechteckförmiger Grundbereich
- 54: Wulst
- 54': Fortsatz
- 56, 57: Dichtlippe

- 60, 60': Laufbahneinlage

- 70': Vertiefung

## Patentansprüche

1. Linearwälzlager, beinhaltend folgende Merkmale:
- Ein hohlzylinderartiges Grundelement (10, 10') mit im wesentlichen geradlinigen Führungen (14) für die belasteten und unbelasteten, zum endlosen Umlauf vorgesehene Wälzkörper,
- wenigstens ein ringartiges Umlenkelement (20, 20') aus Kunststoff mit wenigstens einer Umlenkführung (24) zwischen den geradlinigen Führungen (14),
- wenigstens ein ringartiges Deckelement (30, 30') aus Kunststoff und
- an wenigstens einem axialen Ende des Grundelements (10, 10') ist dieses im Bereich des Außenmantels mit einer derartigen axialen Auskragung (11) ausgebildet, dass in der Höhlung der Auskragung (11) nacheinander das Umlenkelement (20, 20') und das Deckelelement (30, 30') anordenbar sind,
**dadurch gekennzeichnet,**
**dass** die Auskragung (11), das Umlenkelement (20, 20') und das Deckelement (30, 30') derart ausgebildet sind, dass die Elemente (20, 20', 30, 30') in die Auskragung (11) einschnappbar sind,
wozu die Auskragung (11) mit die Auskragung (11) radial durchdringenden Öffnungen (12) und das Umlenk- und Deckelelement (20, 20', 30, 30') mit entsprechenden radialen Fortsätzen (22, 32) ausgebildet sind,
wobei das Umlenk- und Deckelement (20, 20', 30, 30') zum Einschnappen in ein und dieselben Öffnungen (12) vorgesehen sind.

2. Linearwälzlager, beinhaltend folgende Merkmale:
- Ein hohlzylinderartiges Grundelement (10, 10') mit im wesentlichen geradlinigen Führungen (14) für die belasteten und unbelasteten, zum endlosen Umlauf vorgesehene Wälzkörper,
- wenigstens ein ringartiges Umlenkelement (20, 20') aus Kunststoff mit wenigstens einer Umlenkführung (24) zwischen den geradlinigen Führungen (14).
- wenigstens ein ringartiges Deckelement (30, 30') aus Kunststoff und
- an wenigstens einem axialen Ende des Grundelements (10, 10') ist dieses im Bereich des Außenmantels mit einer derartigen axialen Auskragung (11) ausgebildet, dass in der Höhlung der Auskragung (11) nacheinander das Umlenkelement (20, 20') und das Deckelelement (30, 30') anordenbar sind,
**dadurch gekennzeichnet,**
**dass** die Auskragung (11), das Umlenkelement (20, 20') und das Deckelement (30, 30') derart ausgebildet sind, dass die Elemente (20, 20', 30, 30') in die Auskragung (11) einschnappbar sind,
wozu die Auskragung (11) mit die Auskragung (11) radial durchdringenden Öffnungen (12) und das Umlenk- und Deckelelement (20, 20', 30, 30') mit entsprechenden radialen Fortsätzen (22, 32) ausgebildet sind,
wobei die Öffnungen (12) und die radialen Fortsätze (22, 32) derart ausgebildet und/oder in Umfängsrichtung verteilt angeordnet sind, dass das Grundelement, das Umlenk- und das Deckelement (10, 10', 20, 20', 30, 30') ausschließlich in einer vorgebbaren Verdrehposition zueinander einschnappbar sind.

3. Linearwälzlager nach Anspruch 2, wobei das Umlenk- und Deckelement (20, 20', 30, 30') zum Einschnappen in ein und dieselben Öffnungen (12) vorgesehen sind.

4. Linearwälzlager nach einem der Ansprüche 1 bis 3 wobei das Grundelement (10, 10') aus Kunststoff ausgebildet ist.

5. Linearwälzlager nach einem der Ansprüche 1 bis 4, wobei wenigstens zwei der Elemente (10, 10', 20, 20', 30, 30'), insbesondere das Umlenk- und das Deckelement (20, 20', 30, 30'), aus Kunststoffen unterschiedlicher Farbe ausgebildet sind.

6. Linearwälzlager nach einem der Ansprüche 1 bis 5, wobei das Umlenkelement (20, 20') und das Deckelelement (30, 30') in axialer Richtung frei von Hinterschneidungen ausgebildet sind.

7. Linearwälzlager nach einem der Ansprüche 1 bis 6, wobei wenigstens eines der Elemente (10, 10', 20, 20', 30, 30') durch ein Spritzgießen hergestellt ist.

8. Linearwälzlager nach Anspruch 7, wobei das Element (10, 10', 20, 20', 30, 30') derart ausgebildet ist, dass es im Rahmen des Spritzgießens innen ausschließlich axial entformbar ist.

9. Linearwälzlager nach einem der Ansprüche 7 oder 8, wobei das Element (10, 10', 20, 20', 30, 30') derart ausgebildet ist, dass es im Rahmen des Spritzgießens frei von einer Zwangsentformung entformbar ist.

10. Linearwälzlager nach einem der Ansprüche 1 bis 9, wobei zwischen den Elementen (10, 10', 20, 20', 30, 30') ein Schmierstoffspeicher (40, 40') anordenbar ist.

11. Linearwälzlager nach Anspruch 10, wobei der Schmierstoffspeicher (40, 40') mit radial nach innen vorstehenden Fortsätzen (46) ausgebildet ist.

12. Linearwälzlager nach Anspruch 11, wobei die Fortsätze (46) derart in Umfangsrichtung verteilt angeordnet und ausgebildet sind, dass lediglich ein Schmieren in Längsrichtung der belasteten Wälzkörperreihen stattfindet.

13. Linearwälzlager nach einem der Ansprüche 10 bis 12, wobei der Schmierstoffspeicher (40, 40') aus einem mit einem Schmierstoff tränkbaren porösen Schaumstoff ausgebildet ist.

14. Linearwälzlager nach einem der Ansprüche 10 bis 13, wobei der Schmierstoffspeicher (40, 40') an eine Stirnseite des Umlenkelements (20, 20') unmittelbar anschließend angeordnet und das Umlenkelement (20, 20') an der dem Schmierstoffspeicher (40, 40') zugewandten Stirnseite im Bereich des Innenmantels mit axial vorstehenden sektorartigen Fortsätzen (26) ausgebildet ist

15. Linearwälzlager nach Anspruch 14, wobei der Schmierstoffspeicher (40, 40') die sektorartigen Fortsätze (26) des Umlenkelements (20, 20') ringartig umschließend ausgebildet ist und die radialen Fortsätze (46) des Schmierstoffspeichers (40, 40') zwischen den sektorartigen Fortsätzen (26) des Umlenkelements (20, 20') angeordnet sind.

16. Linearwälzlager nach einem der Ansprüche 14 oder 15, wobei die sektorartigen Fortsätze (26) des Umlenkelements (20, 20') und die radialen Fortsätze (46) des Schmierstoffspeichers (40, 40') derart ausgebildet und/oder in Umfangsrichtung verteilt angeordnet sind, dass der Schmierstoffspeicher (40, 40') ausschließlich in einer vorgebbaren Verdrehposition bezüglich dem Umlenkelement (20, 20') am Umlenkelement (20, 20') bestimmungsgemäß anordenbar ist.

17. Linearwälzlager nach einem der Ansprüche 1 bis 16, wobei zwischen den Elementen (10, 10', 20, 20', 30, 30'), insbesondere zwischen dem Umlenk - und dem Deckelement (20, 20', 30, 30') eine Dichtung (50, 50') anordenbar ist.

18. Linearwälzlager nach Anspruch 17, wobei die Dichtung (50, 50') materialeinheitlich und einstückig aus einem Elastomermaterial ausgebildet ist.

19. Linearwälzlager nach einem der Ansprüche 17 oder 18, wobei die ringartige Dichtung (50, 50') ausgehend vom Außenmantel eines rechteckförmigen Längsschnittsbereichs (52) einen schräg nach außen auskragenden, umlaufenden Fortsatz (54') umfasst.

20. Linearwälzlager nach einem der Ansprüche 17 bis 19, wobei die ringartige Dichtung (50, 50') ausgehend von einem Mittenbereich des Innenmantels eines rechteckförmigen Längsschnittsbereichs (52) eine schräg nach außen und eine schräg nach innen hin auskragende, umlaufende Dichtlippe (56, 57) umfasst.

21. Linearwälzlager nach Anspruch 20, wobei das Umlenkelement (20, 20') und/oder das Deckelement (30, 30') stirnseitig mit axial auskragenden Nasen (27, 37) ausgebildet sind, die zum Hineinragen zwischen den rechteckförmigen Längsschnittsbereich (52) und der schräg nach außen oder innen hin auskragenden Dichtlippe (56, 57) vorgesehen sind.

22. Linearwälzlager nach Anspruch 21, wobei am Umlenkelement (20, 20') die Nasen (27) an den Stirnseiten der sektorartigen Fortsätze (26) angeordnet sind.

23. Linearwälzlager nach einem der Ansprüche 1 bis 22, wobei das Umlenkelement (20, 20') einen axialen Fortsatz (29) umfasst, der bestimmungsgemäß zum Eingreifen in eine entsprechende Ausnehmung (39) am Deckelement (30, 30') vorgesehen ist.

24. Linearwälzlager nach Anspruch 23, wobei der Fortsatz (29) und die Ausnehmung (39) mit einem dreieckförmigen Querschnitt ausgebildet sind.

25. Linearwälzlager nach einem der Ansprüche 23 oder 24, wobei der Fortsatz (29) eine zum Mantel des Grundelements (10, 10') senkrecht stehende Hauptlastrichtung des Linearwälzlagers anzeigt.

26. Linearwälzlager nach einem der Ansprüche 1 bis 25, wobei das Grundelement (10, 10') außenmantelseitig eine Vertiefung (16) umfasst, die für ein axial- und verdrehsicheres Befestigen des Grundelements (10, 10') und/oder als Nachschmiernippel ausgebildet ist.

27. Linearwälzlager nach Ansprunch 26, wobei das Grundelement (10, 10') und/oder das Deckelement (30, 30') stirnseitig mit einer Markierung (18) ausgebildet sind, die die Winkelposition der Vertiefung (16) anzeigt.

28. Linearwälzlager nach einem der Ansprüche 1 bis 27, wobei das Grundelement (10, 10') mit Aufnahmeöffnungen für Laufbahneinlagen (60, 60') für ein Abrollen wenigstens der belasteten Wälzkörper ausgebildet ist.

29. Linearwälzlager nach Anspruch 28, wobei die Laufbahneinlagen (60, 60') aus einem Metall, insbesondere einem härtbaren Stahl, ausgebildet sind.

30. Linearwälzlager nach einem der Ansprüche 1 bis 29, wobei die Wälzkörper als Kugeln ausgebildet sind.

31. Linearwälzlager nach einem der Ansprüche 1 bis 30, wobei die Elemente (10, 20, 30), der Schmierstoffspeicher (40) und/oder die Dichtung (50) in Umfangsrichtung in sich geschlossen ausgebildet sind.

32. Linearwälzlager nach einem der Ansprüche 1 bis 30, wobei die Elemente (10', 20',30'), der Schmierstoffspeicher (40') und/oder die Dichtung (50') in einem übereinstimmenden, sektorartigen Umfangsabschnitt mit einer Durchbrechung ausgebildet sind, die die volle Wandstärke und die gesamte Längsausdehnung erfasst.

33. Linearwälzlager nach Anspruch 32, wobei das Grundelement (10') und das Umlenkelement (20') innenmantelseitig beiderseits der Durchbrechung mit längsverlaufenden rillenartigen Vertiefungen (70') ausgebildet sind, in denen für ein Abdichten entsprechende Abdichtungen anordenbar sind.

## Claims

1. Linear anti-friction bearing, containing the following features:
- a hollow-cylindrical basic element (10, 10') having substantially rectilinear guides (14) for the loaded and unloaded rolling bodies which are provided for endless circulation,
- at least one ring-like deflecting element (20, 20') made from plastic with at least one deflecting guide (24) between the rectilinear guides (14),
- at least one ring-like covering element (30, 30') made from plastic, and,
- at at least one axial end of the basic element (10, 10'), the latter is configured in the region of the outer shell with an axial bulge (11) which is such that the deflecting element (20, 20') and the covering element (30, 30') can be arranged one after another in the cavity of the bulge (11),
**characterized**
**in that** the bulge (11), the deflecting element (20, 20') and the covering element (30, 30') are configured in such a way that the elements (20, 20', 30, 30') can be snapped into the bulge (11),
to which end the bulge (11) is configured with openings (12) which penetrate the bulge (11) radially and the deflecting and covering elements (20, 20', 30, 30') are configured with corresponding radial projections (22, 32),
the deflecting and covering elements (20, 20', 30, 30') being provided for snapping into one and the same openings (12).

2. Linear anti-friction bearing, containing the following features:
- a hollow-cylindrical basic element (10, 10') having substantially rectilinear guides (14) for the loaded and unloaded rolling bodies which are provided for endless circulation,
- at least one ring-like deflecting element (20, 20') made from plastic with at least one deflecting guide (24) between the rectilinear guides (14),
- at least one ring-like covering element (30, 30') made from plastic, and,
- at at least one axial end of the basic element (10, 10'), the latter is configured in the region of the outer shell with an axial bulge (11) which is such that the deflecting element (20, 20') and the covering element (30, 30') can be arranged one after another in the cavity of the bulge (11),
**characterized**
**in that** the bulge (11), the deflecting element (20, 20') and the covering element (30, 30') are configured in such a way that the elements (20, 20', 30, 30') can be snapped into the bulge (11),
to which end the bulge (11) is configured with openings (12) which penetrate the bulge (11) radially and the deflecting and covering elements (20, 20', 30, 30') are configured with corresponding radial projections (22, 32),
the openings (12) and the radial projections (22, 32) being configured and/or arranged distributed in the circumferential direction in such a way that the basic element, the deflecting element and the covering element (10, 10', 20, 20', 30, 30') can be snapped in exclusively in a predefinable rotational position with respect to one another.

3. Linear anti-friction bearing according to Claim 2, the deflecting and covering elements (20, 20', 30, 30') being provided for snapping into one and the same openings (12).

4. Linear anti-friction bearing according to one of Claims 1 to 3, the basic element (10, 10') being configured from plastic.

5. Linear anti-friction bearing according to one of Claims 1 to 4, at least two of the elements (10, 10', 20, 20', 30, 30'), in particular the deflecting element and the covering element (20, 20', 30, 30'), being configured from plastics of different colour.

6. Linear anti-friction bearing according to one of Claims 1 to 5, the deflecting element (20, 20') and the covering element (30, 30') being configured such that they are free of undercuts in the axial direction.

7. Linear anti-friction bearing according to one of Claims 1 to 6, at least one of the elements (10, 10', 20, 20', 30, 30') being produced by way of an injection-moulding process.

8. Linear anti-friction bearing according to Claim 7, the element (10, 10', 20, 20', 30, 30') being configured in such a way that it can be demoulded on the inside exclusively axially during the injection-moulding process.

9. Linear anti-friction bearing according to either of Claims 7 and 8, the element (10, 10', 20, 20', 30, 30') being configured in such a way that it can be demoulded during the injection-moulding process without forcible demoulding.

10. Linear anti-friction bearing according to one of Claims 1 to 9, it being possible for a lubricant store (40, 40') to be arranged between the elements (10, 10', 20, 20', 30, 30').

11. Linear anti-friction bearing according to Claim 10, the lubricant store (40, 40') being configured with radially inwardly protruding projections (46).

12. Linear anti-friction bearing according to Claim 11, the projections (46) being configured and arranged distributed in the circumferential direction in such a way that merely lubrication takes place in the longitudinal direction of the loaded rolling-body rows.

13. Linear anti-friction bearing according to one of Claims 10 to 12, the lubricant store (40, 40') being configured from a porous foam which can be impregnated with a lubricant.

14. Linear anti-friction bearing according to one of Claims 10 to 13, the lubricant store (40, 40') being arranged such that it is immediately adjacent to an end side of the deflecting element (20, 20'), and, on the end side which faces the lubricant store (40, 40'), the deflecting element (20, 20') being configured in the region of the inner shell with axially protruding sector-like projections (26).

15. Linear anti-friction bearing according to Claim 14, the lubricant store (40, 40') being configured so as to enclose the sector-like projections (26) of the deflecting element (20, 20') in a ring-like manner, and the radial projections (46) of the lubricant store (40, 40') being arranged between the sector-like projections (26) of the deflecting element (20, 20').

16. Linear anti-friction bearing according to either of Claims 14 and 15, the sector-like projections (26) of the deflecting element (20, 20') and the radial projections (46) of the lubricant store (40, 40') being configured and/or being arranged distributed in the circumferential direction in such a way that the lubricant store (40, 40') can be arranged as intended on the deflecting element (20, 20') exclusively in a predefinable rotational position with regard to the deflecting element (20, 20').

17. Linear anti-friction bearing according to one of Claims 1 to 16, it being possible for a seal (50, 50') to be arranged between the elements (10, 10', 20, 20', 30, 30'), in particular between the deflecting element and the covering element (20, 20', 30, 30').

18. Linear anti-friction bearing according to Claim 17, the seal (50, 50') being configured with a single material and integrally from an elastomer material.

19. Linear anti-friction bearing according to either of Claims 17 and 18, the ring-like seal (50, 50') comprising, starting from the outer shell of a rectangular longitudinal-section region (52), an obliquely outwardly bulging, circumferential projection (54').

20. Linear anti-friction bearing according to one of Claims 17 to 19, the ring-like seal (50, 50') comprising, starting from a centre region of the inner shell of a rectangular longitudinal-section region (52), one obliquely outwardly and one obliquely inwardly bulging, circumferential sealing lip (56, 57).

21. Linear anti-friction bearing according to Claim 20, the deflecting element (20, 20') and/or the covering element (30, 30') being configured on the end side with axially bulging lugs (27, 37) which are provided for protruding between the rectangular longitudinal-section region (52) and the obliquely outwardly or inwardly bulging sealing lip (56, 57).

22. Linear anti-friction bearing according to Claim 21, the lugs (27) being arranged on the deflecting element (20, 20') on the end sides of the sector-like projections (26).

23. Linear anti-friction bearing according to one of Claims 1 to 22, the deflecting element (20, 20') comprising an axial projection (29) which is provided as intended for engagement into a corresponding recess (39) on the covering element (30, 30').

24. Linear anti-friction bearing according to Claim 23, the projection (29) and the recess (39) being configured with a triangular cross section.

25. Linear anti-friction bearing according to either of Claims 23 and 24, the projection (29) indicating a main load direction of the linear anti-friction bearing, which main load direction lies perpendicularly with respect to the shell of the basic element (10, 10').

26. Linear anti-friction bearing according to one of Claims 1 to 25, the basic element (10, 10') comprising, on the outer-shell side, a depression (16) which is configured for axially locked and rotationally locked fastening of the basic element (10, 10') and/or as a grease nipple.

27. Linear anti-friction bearing according to Claim 26, the basic element (10, 10') and/or the covering element (30, 30') being configured on the end side with a marking (18) which indicates the angular position of the depression (16).

28. Linear anti-friction bearing according to one of Claims 1 to 27, the basic element (10, 10') being configured with receiving openings for raceway inserts (60, 60') for rolling at least of the loaded rolling bodies.

29. Linear anti-friction bearing according to Claim 28, the raceway inserts (60, 60') being configured from a metal, in particular a hardenable steel.

30. Linear anti-friction bearing according to one of Claims 1 to 29, the rolling bodies being configured as balls.

31. Linear anti-friction bearing according to one of Claims 1 to 30, the elements (10, 20, 30), the lubricant store (40) and/or the seal (50) being configured so as to be closed in themselves/itself in the circumferential direction.

32. Linear anti-friction bearing according to one of Claims 1 to 30, the elements (10', 20', 30'), the lubricant store (40') and/or the seal (50') being configured in a coinciding, sector-like circumferential section with an aperture which covers the full wall thickness and the entire longitudinal extent.

33. Linear anti-friction bearing according to Claim 32, the basic element (10') and the deflecting element (20') being configured on the inner-shell side on both sides of the aperture with longitudinally extending groove-like depressions (70'), in which corresponding seals can be arranged for sealing purposes.

## Revendications

1. Palier à roulement linéaire contenant les caractéristiques suivantes :
- un élément de base cylindrique creux (10, 10') avec des guides essentiellement linéaires (14) pour les corps de roulement prévus pour circuler sans fin, sollicités et non sollicités,
- au moins un élément déflecteur annulaire (20, 20') en plastique avec au moins un guide déflecteur (24) entre les guides linéaires (14),
- au moins un élément de recouvrement annulaire (30, 30') en plastique et
- à au moins une extrémité axiale de l'élément de base (10, 10'), celui-ci est réalisé dans la région de l'enveloppe extérieure avec une partie saillante axiale (11) telle que l'élément déflecteur (20, 20') et l'élément de recouvrement (30, 30') puissent être disposés l'un derrière l'autre à la hauteur de la partie saillante (11) dans la cavité de la partie saillante (11),
**caractérisé en ce que**
la partie saillante (11), l'élément déflecteur (20, 20') et l'élément de recouvrement (30, 30') sont réalisés de telle sorte que les éléments (20, 20', 30, 30') puissent être encliquetés dans la partie saillante (11),
la partie saillante (11) étant à cet effet réalisée avec des ouvertures (12) traversant radialement la partie saillante (11) et les éléments déflecteur et de recouvrement (20, 20', 30, 30') étant réalisés avec des saillies radiales correspondantes (22, 32),
les éléments déflecteur et de recouvrement (20, 20', 30, 30') étant prévus pour s'encliqueter dans les mêmes et uniques ouvertures (12).

2. Palier à roulement linéaire contenant les caractéristiques suivantes :
- un élément de base cylindrique creux (10, 10') avec des guides essentiellement linéaires (14) pour les corps de roulement prévus pour circuler sans fin, sollicités et non sollicités,
- au moins un élément déflecteur annulaire (20, 20') en plastique avec au moins un guide déflecteur (24) entre les guides linéaires (14),
- au moins un élément de recouvrement annulaire (30, 30') en plastique et
- à au moins une extrémité axiale de l'élément de base (10, 10'), celui-ci est réalisé dans la région de l'enveloppe extérieure avec une partie saillante axiale (11) telle que l'élément déflecteur (20, 20') et l'élément de recouvrement (30, 30') puissent être disposés l'un derrière l'autre à la hauteur de la partie saillante (11) dans la cavité de la partie saillante (11),
**caractérisé en ce que**
la partie saillante (11), l'élément déflecteur (20, 20') et l'élément de recouvrement (30, 30') sont réalisés de telle sorte que les éléments (20, 20', 30, 30') puissent être encliquetés dans la partie saillante (11),
la partie saillante (11) étant à cet effet réalisée avec des ouvertures (12) traversant radialement la partie saillante (11) et les éléments déflecteur et de recouvrement (20, 20', 30, 30') étant réalisés avec des saillies radiales correspondantes (22, 32),
les ouvertures (12) et les saillies radiales (22, 32) étant réalisées et/ou étant disposées de manière répartie dans la direction périphérique de telle sorte que l'élément de base, l'élément déflecteur et l'élément de recouvrement (10, 10', 20, 20', 30, 30') puissent être encliquetés les uns par rapport aux autres exclusivement dans une position de rotation prédéfinissable.

3. Palier à roulement linéaire selon la revendication 2, dans lequel les éléments déflecteur et de recouvrement (20, 20', 30, 30') sont prévus pour s'encliqueter dans les mêmes et uniques ouvertures (12).

4. Palier à roulement linéaire selon l'une quelconque des revendications 1 à 3, dans lequel l'élément de base (10, 10') est réalisé en plastique.

5. Palier à roulement linéaire selon l'une quelconque des revendications 1 à 4, dans lequel au moins deux des éléments (10, 10', 20, 20', 30, 30'), en particulier l'élément déflecteur et l'élément de recouvrement (20, 20', 30, 30') sont réalisés en plastiques de différentes couleurs.

6. Palier à roulement linéaire selon l'une quelconque des revendications 1 à 5, dans lequel l'élément déflecteur (20, 20') et l'élément de recouvrement (30, 30') sont réalisés dans la direction axiale de manière exempte de contre-dépouilles.

7. Palier à roulement linéaire selon l'une quelconque des revendications 1 à 6, dans lequel au moins l'un des éléments (10, 10', 20, 20', 30, 30') est fabriqué par moulage par injection.

8. Palier à roulement linéaire selon la revendication 7, dans lequel l'élément (10, 10', 20, 20', 30, 30') est réalisé de telle sorte qu'il puisse être démoulé exclusivement axialement dans le cadre du moulage par injection à l'intérieur.

9. Palier à roulement linéaire selon l'une quelconque des revendications 7 ou 8, dans lequel l'élément (10, 10', 20, 20', 30, 30') est réalisé de telle sorte qu'il puisse être démoulé dans le cadre du moulage par injection sans être soumis à un démoulage forcé.

10. Palier à roulement linéaire selon l'une quelconque des revendications 1 à 9, dans lequel entre les éléments (10, 10', 20, 20', 30, 30') peut être disposé un dispositif de stockage de lubrifiant (40, 40').

11. Palier à roulement linéaire selon la revendication 10, dans lequel le dispositif de stockage de lubrifiant (40, 40') est réalisé avec des saillies (46) saillant radialement vers l'intérieur.

12. Palier à roulement linéaire selon la revendication 11, dans lequel les saillies (46) sont disposées de manière répartie dans la direction périphérique et sont réalisées de telle sorte qu'une lubrification n'ait lieu que dans la direction longitudinale des rangées de corps de roulement sollicités.

13. Palier à roulement linéaire selon l'une quelconque des revendications 10 à 12, dans lequel le dispositif de stockage de lubrifiant (40, 40') est réalisé en une mousse poreuse pouvant être imprégnée de lubrifiant.

14. Palier à roulement linéaire selon l'une quelconque des revendications 10 à 13, dans lequel le dispositif de stockage de lubrifiant (40, 40') est disposé de manière à se raccorder directement à un côté frontal de l'élément déflecteur (20, 20') et l'élément déflecteur (20, 20') est réalisé au niveau du côté frontal tourné vers le dispositif de stockage de lubrifiant (40, 40') dans la région de l'enveloppe interne avec des saillies (26) saillant axialement en forme de secteurs.

15. Palier à roulement linéaire selon la revendication 14, dans lequel le dispositif de stockage de lubrifiant (40, 40') est réalisé de manière à entourer sous forme annulaire les saillies (26) en forme de secteurs de l'élément déflecteur (20, 20'), et les saillies radiales (46) du dispositif de stockage de lubrifiant (40, 40') sont disposées entre les saillies (26) en forme de secteurs de l'élément déflecteur (20, 20').

16. Palier à roulement linéaire selon l'une quelconque des revendications 14 ou 15, dans lequel les saillies (26) en forme de secteurs de l'élément déflecteur (20, 20') et les saillies radiales (46) du dispositif de stockage de lubrifiant (40, 40') sont réalisées et/ou sont disposées de manière répartie dans la direction périphérique de telle sorte que le dispositif de stockage de lubrifiant (40, 40') puisse être disposé sur l'élément déflecteur (20, 20') de manière conforme aux exigences exclusivement dans une position de rotation prédéfinissable par rapport à l'élément déflecteur (20, 20').

17. Palier à roulement linéaire selon l'une quelconque des revendications 1 à 16, dans lequel, entre les éléments (10, 10', 20, 20', 30, 30'), en particulier entre l'élément déflecteur et l'élément de recouvrement (20, 20', 30, 30') peut être disposé un joint d'étanchéité (50, 50').

18. Palier à roulement linéaire selon la revendication 17, dans lequel le joint d'étanchéité (50, 50') est réalisé venu de matière et d'une seule pièce en un matériau élastomère.

19. Palier à roulement linéaire selon l'une quelconque des revendications 17 ou 18, dans lequel le joint d'étanchéité annulaire (50, 50') comprend, à partir de l'enveloppe extérieure d'une région rectangulaire en coupe longitudinale (52), une saillie (54') périphérique, saillant obliquement vers l'extérieur.

20. Palier à roulement linéaire selon l'une quelconque des revendications 17 à 19, dans lequel le joint d'étanchéité (50, 50'), partant d'une région centrale de l'enveloppe intérieure d'une région rectangulaire en section longitudinale (52), comprend une lèvre d'étanchéité (56) périphérique, saillant radialement vers l'extérieur et une lèvre d'étanchéité (57) périphérique saillant radialement vers l'intérieur.

21. Palier à roulement linéaire selon la revendication 20, dans lequel l'élément déflecteur (20, 20') et/ou l'élément de recouvrement (30, 30') sont réalisés du côté frontal avec des nez saillant axialement (27, 37), qui sont prévus pour pénétrer entre la région rectangulaire en section longitudinale (52) et la lèvre d'étanchéité saillant obliquement vers l'extérieur (56) ou vers l'intérieur (57).

22. Palier à roulement linéaire selon la revendication 21, dans lequel les nez (27) sur l'élément déflecteur (20, 20') sont disposés sur les côtés frontaux des saillies (26) en forme de secteurs.

23. Palier à roulement linéaire selon l'une quelconque des revendications 1 à 22, dans lequel l'élément déflecteur (20, 20') comprend une saillie axiale (29) qui est prévue, de manière conforme aux exigences, pour venir en prise dans un évidement correspondant (39) sur l'élément de recouvrement (30, 30').

24. Palier à roulement linéaire selon la revendication 23, dans lequel la saillie (29) et l'évidement (39) sont réalisés avec une section transversale de forme triangulaire.

25. Palier à roulement linéaire selon l'une quelconque des revendications 23 ou 24, dans lequel la saillie (29) indique une direction de charge principale du palier à roulement linéaire perpendiculaire à l'enveloppe de l'élément de base (10, 10').

26. Palier à roulement linéaire selon l'une quelconque des revendications 1 à 25, dans lequel l'élément de base (10, 10') comprend du côté de l'enveloppe extérieure un renfoncement (16) qui est réalisé pour une fixation solidaire axialement et en rotation de l'élément de base (10, 10') et/ou en tant que raccord post-lubrification.

27. Palier à roulement linéaire selon la revendication 26, dans lequel l'élément de base (10, 10') et/ou l'élément de recouvrement (30, 30') sont réalisés avec un marquage (18) qui indique la position angulaire du renfoncement (16).

28. Palier à roulement linéaire selon l'une quelconque des revendications 1 à 27, dans lequel l'élément de base (10, 10') est réalisé avec des ouvertures de réception pour des inserts de piste de roulement (60, 60') pour le roulement au moins des corps de roulement sollicités.

29. Palier à roulement linéaire selon la revendication 28, dans lequel les inserts de piste de roulement (60, 60') sont réalisés en métal, en particulier en un acier durcissable.

30. Palier à roulement linéaire selon l'une quelconque des revendications 1 à 29, dans lequel les corps de roulement sont réalisés sous forme de billes.

31. Palier à roulement linéaire selon l'une quelconque des revendications 1 à 30, dans lequel les éléments (10, 20, 30), le dispositif de stockage de lubrifiant (40) et/ou le joint d'étanchéité (50) sont réalisés de manière fermée en soi dans la direction périphérique.

32. Palier à roulement linéaire selon l'une quelconque des revendications 1 à 30, dans lequel les éléments (10', 20', 30'), le dispositif de stockage de lubrifiant (40') et/ou le joint d'étanchéité (50') sont réalisés dans une portion périphérique coïncidente, en forme de secteur, avec un orifice qui couvre toute l'épaisseur de paroi et toute l'étendue longitudinale.

33. Palier à roulement linéaire selon la revendication 32, dans lequel l'élément de base (10') et l'élément déflecteur (20') sont réalisés du côté de l'enveloppe interne des deux côtés de l'orifice avec des renfoncements (70') s'étendant longitudinalement en forme de rainures, dans lesquels peuvent être disposées des garnitures d'étanchéité correspondantes pour réaliser l'étanchéité.
